# FASCICULE DE BREVET EUROPEEN

(11) **EP 4 140 836 B1**
(45) Date de publication et mention de la délivrance du brevet: **12.06.2024**
(21) Numéro de dépôt: 22191772.7
(22) Date de dépôt: 23.08.2022
(51) Int. Cl.: B60S 1/48

(54) **PROCÉDÉ DE NETTOYAGE D'IMPACTS D'INSECTES SUR UNE SURFACE VITRÉE D'UN VÉHICULE**
VERFAHREN ZUR REINIGUNG VON INSEKTENAUFSCHLÄGEN AUF EINER GLASFLÄCHE EINES FAHRZEUGS
METHOD FOR CLEANING INSECT IMPACTS FROM A GLAZED SURFACE OF A VEHICLE

(30) Priorité: 31.08.2021 FR 2109094
(43) Date de publication de la demande: 01.03.2023
(73) Titulaire: Valeo Systèmes d'Essuyage, 78322 Le Mesnil Saint Denis (FR)
(72) Inventeur: GIRAUD, Frederic, 78321 LE MESNIL SAINT DENIS (FR); TERRASSE, Jean-Luc, 78321 LE MESNIL SAINT DENIS (FR); FILLOUX, Alexandre, 78321 LE MESNIL SAINT DENIS (FR)
(74) Mandataire: Valeo Visibility

(56) Documents cités:
- WO-A1-2021/121570
- WO-A1-2021/130013
- DE-A1-102011 105 001

## Description

La présente invention se rapporte à un procédé de nettoyage d'une surface vitrée d'un véhicule. Elle trouve une application particulière mais non limitative dans les véhicules automobiles.

Le document WO 2021/130013 A1 divulgue un procédé de nettoyage d'une surface externe d'au moins un organe optique d'un véhicule, ledit véhicule comprenant un dispositif de nettoyage comprenant un système de d'essuyage avec au moins un dispositif de pulvérisation d'un liquide.

Il est connu de l'homme du métier un procédé de nettoyage d'une surface vitrée d'un véhicule, ledit véhicule comprenant un dispositif de nettoyage. Le dispositif de nettoyage comprend un système d'essuyage avec au moins un dispositif de pulvérisation d'un liquide, qui permet de nettoyer notamment les impacts d'insectes sur la surface vitrée d'un pare-brise du véhicule.

Un inconvénient de cet état de la technique antérieur est que ledit procédé de nettoyage nécessite l'intervention humaine, puisque c'est l'utilisateur qui déclenche manuellement à sa demande (à distance ou non) le procédé de nettoyage.

La présente invention vise à proposer un procédé de nettoyage d'une surface vitrée d'un véhicule qui soit automatique et autonome dans lequel l'intervention humaine n'est plus nécessaire.

A cet effet, l'invention propose un nettoyage d'une surface vitrée de véhicule, , ledit véhicule comprenant un dispositif de nettoyage comprenant un système de d'essuyage avec au moins un dispositif de pulvérisation d'un liquide, caractérisé en ce que ledit procédé de nettoyage comprend les étapes de :
- vérifier une première condition selon laquelle la saison courante est le printemps ou l'été,
- vérifier une seconde condition qui est la probabilité d'avoir des impacts d'insectes sur ladite surface vitrée,
- vérifier une troisième condition selon laquelle ledit véhicule est arrêté,
- si l'ensemble desdites conditions est rempli, alors activer ledit dispositif de nettoyage pour lancer un cycle de nettoyage, et
- exécuter par ledit dispositif de nettoyage ledit cycle de nettoyage.

En testant différentes conditions permettant de détecter la présence d'impacts d'insectes sur la surface vitrée, le procédé de nettoyage d'une surface vitrée de véhicule selon l'invention permet de lancer le nettoyage de la surface vitrée du véhicule de manière automatique lorsque cela est nécessaire, à savoir en présence d'impacts d'insectes sur ladite surface vitrée et si cette dernière est sale. Par ailleurs, comme le nettoyage est automatique, cela permet de nettoyer la surface vitrée suffisamment tôt avant que les impacts d'insectes ne gênent la visibilité du conducteur et ainsi d'utiliser de façon optimum le liquide de nettoyage sans consommer au-delà de ce qui est nécessaire.

Selon des modes de réalisation non limitatifs, ledit procédé de nettoyage d'une surface vitrée d'un véhicule peut comporter en outre une ou plusieurs caractéristiques supplémentaires prises seules ou selon toutes les combinaisons techniquement possibles, parmi les suivantes.

Selon un mode de réalisation non limitatif, l'étape de vérification de la saison courante s'effectue au moyen de la date courante et de l'hémisphère dans laquelle se trouve ledit véhicule.

Selon un mode de réalisation non limitatif, l'étape de vérification de la probabilité d'avoir des impacts d'insectes sur ladite surface vitrée est basée sur une vitesse dudit véhicule supérieure à un seuil primaire.

Selon un mode de réalisation non limitatif, ledit seuil primaire est égal à 70km/h.

Selon un mode de réalisation non limitatif, l'étape de vérification de la probabilité d'avoir des impacts d'insectes sur ladite surface vitrée est basée sur une géolocalisation dudit véhicule en dehors d'une agglomération urbaine.

Selon un mode de réalisation non limitatif, ledit procédé de nettoyage comprend en outre une étape supplémentaire de vérifier une quatrième condition selon laquelle les impacts d'insectes ont sali ladite surface vitrée de sorte à gêner la visibilité d'un conducteur dudit véhicule.

Selon un mode de réalisation non limitatif, l'étape de vérification de la salissure de ladite surface vitrée par les impacts d'insectes est basée sur :
- une durée de roulage dudit véhicule supérieur à un seuil secondaire, ou
- un nombre d'impacts d'insectes supérieur à un seuil tertiaire.

Selon un mode de réalisation non limitatif, ledit seuil secondaire est égal à trois heures.

Selon un mode de réalisation non limitatif, ledit procédé de nettoyage comprend en outre une étape supplémentaire de vérifier une cinquième condition selon laquelle ledit véhicule est en extérieur.

Selon un mode de réalisation non limitatif, le seuil tertiaire est égal à 15.

Selon un mode de réalisation non limitatif, le liquide est un liquide de démoustiquage.

Selon un mode de réalisation non limitatif, le liquide est un liquide lave-glace ou de l'eau.

Selon un mode de réalisation non limitatif, le liquide est un liquide lave-glace chauffé ou de l'eau chauffée.

Selon un mode de réalisation non limitatif, ladite vérification si ledit véhicule est en extérieur est basée sur :
- une information relative à une trappe à essence ouverte, et
- une information relative à l'absence d'une personne sur le siège conducteur.

Selon un mode de réalisation non limitatif, l'étape de vérification si ledit véhicule est en extérieur est réalisée au moyen d'un capteur de pluie-luminosité.

Selon un mode de réalisation non limitatif, l'étape de vérification si ledit véhicule est en extérieur est réalisée au moyen d'un dispositif de géolocalisation.

Selon un mode de réalisation non limitatif, l'unité de commande électronique est configurée pour :
- coopérer avec l'horloge interne et recevoir une information relative à la date courante, et
- coopérer avec le dispositif de géolocalisation et recevoir une information relative à l'hémisphère dans laquelle se trouve ledit véhicule automobile.

Selon un mode de réalisation non limitatif, l'unité de commande électronique est configurée pour :
- coopérer avec le compteur de vitesse et recevoir une information relative à la vitesse du véhicule automobile, ou
- coopérer avec le dispositif de mesure d'impacts et recevoir une information relative au nombre d'impacts d'insectes sur la surface vitrée, ou
- coopérer avec le dispositif de géolocalisation et recevoir une information indiquant si le véhicule automobile se trouve en dehors d'une agglomération urbaine.

Selon un mode de réalisation non limitatif, l'unité de commande électronique est configurée pour :
- coopérer avec le compteur de temps de roulage et recevoir une information relative à la durée de roulage dudit véhicule automobile, ou
- coopérer avec le dispositif de mesure d'impacts et recevoir une information relative au nombre d'impacts d'insectes sur la surface vitrée.

Selon un mode de réalisation non limitatif, l'unité de commande électronique est configurée pour :
- coopérer avec un capteur de trappe à essence du véhicule automobile et recevoir une information qui indique que ladite trappe à essence est ouverte, et
- coopérer avec le capteur de présence et recevoir une information relative à l'absence d'une personne sur le siège conducteur.

Selon un mode de réalisation non limitatif, l'unité de commande électronique est configurée pour:
- coopérer avec le capteur de pluie-luminosité et recevoir une information relative à la luminosité à l'extérieur du véhicule automobile, et
- coopérer avec le dispositif de géolocalisation et recevoir une information qui indique si la géolocalisation est fonctionnelle.

Il est en outre proposé un système de nettoyage d'une surface vitrée d'un véhicule, ledit système de nettoyage comprenant un dispositif de nettoyage comprenant un système de d'essuyage avec au moins un dispositif de pulvérisation d'un liquide sur une surface vitrée d'un véhicule, ledit dispositif de nettoyage étant configuré pour exécuter un cycle de nettoyage comprenant une pulvérisation par ledit au moins un dispositif de pulvérisation dudit liquide sur ladite surface vitrée, caractérisé en ce que ledit système de nettoyage comprend en outre une unité de commande électronique configurée pour :
- vérifier une première condition selon laquelle la saison courante est le printemps ou l'été,
- vérifier une deuxième condition qui est la probabilité d'avoir des impacts d'insectes sur ladite surface vitrée,
- vérifier une troisième condition selon laquelle ledit véhicule est arrêté, et
- si l'ensemble desdites conditions est rempli, alors activer ledit dispositif de nettoyage pour lancer un cycle de nettoyage.

L'invention et ses différentes applications seront mieux comprises à la lecture de la description qui suit et à l'examen des figures qui l'accompagnent :
[Fig. 1] est un organigramme d'un procédé de nettoyage d'une surface vitrée d'un véhicule, selon un mode de réalisation non limitatif de l'invention,
[Fig. 2] est un organigramme du procédé de nettoyage de la figure 1, ledit procédé de nettoyage comprenant une étape supplémentaire, selon un mode de réalisation non limitatif,
[Fig. 3] est une figure schématique d'un système de nettoyage configuré pour mettre en oeuvre ledit procédé de nettoyage des figures 1 et 2, selon un mode de réalisation non limitatif,
[Fig. 4] est une figure schématique d'un dispositif de nettoyage du système de nettoyage de la figure 3, selon un mode de réalisation non limitatif.

Les éléments identiques, par structure ou par fonction, apparaissant sur différentes figures conservent, sauf précision contraire, les mêmes références.

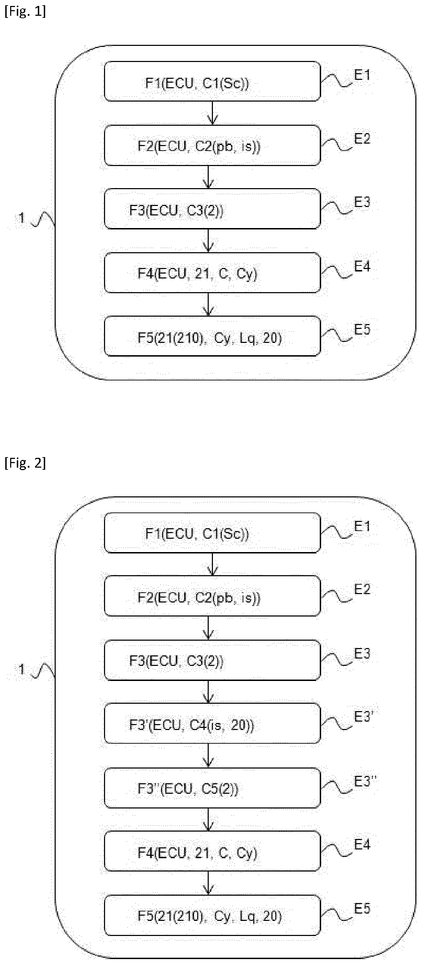

Le procédé de nettoyage 1 d'une surface vitrée 20 d'un véhicule 2 selon l'invention est décrit en référence aux figures 1 et 2 selon des modes de réalisation non limitatifs. Dans un mode de réalisation non limitatif, le véhicule 2 est un véhicule automobile. Par véhicule automobile, on entend tout type de véhicule motorisé. Ce mode de réalisation est pris comme exemple non limitatif dans la suite de la description. Dans la suite de la description, le véhicule 2 est ainsi autrement appelé véhicule automobile 2. Dans un mode de réalisation non limitatif, la surface vitrée 20 est la surface vitrée du pare-brise du véhicule 2.

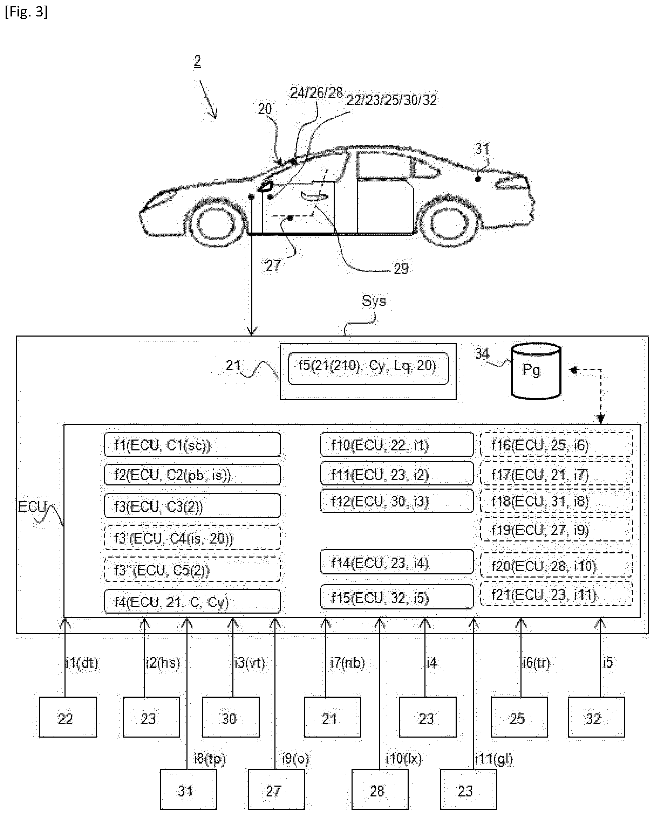

Le véhicule automobile 2 est illustré sur la figure 3.

Tel qu'illustré sur la figure 3, le véhicule automobile 2 comprend un dispositif de nettoyage 21 configuré pour nettoyer la surface vitrée 20 du véhicule automobile 2.

Dans des modes de réalisation non limitatifs, tel qu'illustré sur la figure 3, le véhicule automobile 2 comprend en outre l'un ou plusieurs des éléments suivants:
- une horloge interne 22,
- un dispositif de géolocalisation 23,
- un dispositif de mesure d'impacts d'insectes 24,
- un compteur de temps de roulage 25,
- un accéléromètre 26,
- au moins un capteur de présence 27 situé au niveau du siège conducteur 29 du véhicule automobile 2,
- un capteur de pluie-luminosité 28. Ce capteur peut être séparé en deux capteurs, un de pluie et l'autre de luminosité,
- un compteur de vitesse 30,
- un capteur de trappe à essence 31,
- un capteur d'arrêt 32.

Pour des questions de lisibilité, les éléments 22, 23, 25, 30 et 32 ont été regroupés sur la figure 3, et les éléments 24, 26 et 28 ont été regroupés sur la figure 3.

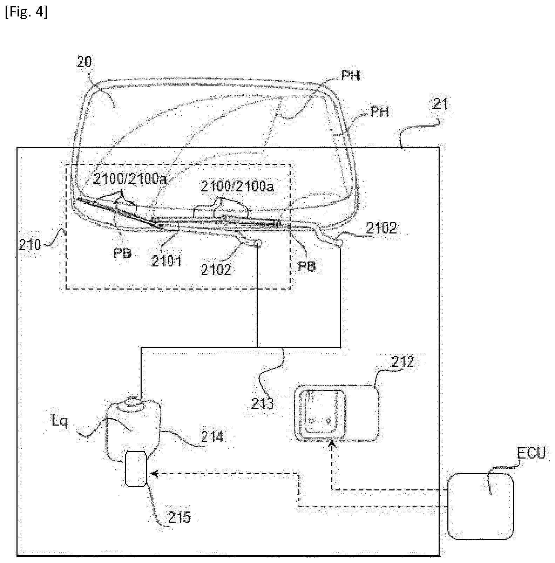

Tel qu'illustré sur la figure 4, le dispositif de nettoyage 21 comprend :
- un système d'essuyage 210,
- un moteur d'entraînement 212,
- un système de canalisation 213,
- un réservoir 214 de stockage d'un liquide de nettoyage Lq,
- au moins une pompe 215.

Le liquide de nettoyage Lq est autrement appelé liquide Lq.

Tel qu'illustré sur la figure 4, ledit système d'essuyage 210 comprend :
- au moins un dispositif de pulvérisation 2100 ayant au moins un orifice 2100a au travers duquel le liquide Lq peut être projeté sur la surface vitrée 20,
- au moins un balai d'essuyage 2101 (autrement appelé balai), et
- au moins un bras d'entraînement 2102 (autrement appelé bras) relié audit au moins un balai d'essuyage 2101 via un dispositif de connexion (non illustré).

Dans un mode de réalisation non limitatif illustré, le système d'essuyage 210 comprend au moins un bras d'entraînement 2102 qui relié au balai d'essuyage 2101 effectue un mouvement de va-et-vient angulaire en vis-à-vis de la surface vitrée 20 entre une position basse PB et une position haute PH. Le bras d'entraînement 2102 est notamment agencé en une tige qui s'étend selon un axe longitudinal et dont une extrémité est reliée au balai d'essuyage 2101 par l'intermédiaire d'un dispositif de connexion (non illustré) et dont une autre extrémité est reliée à un moyen d'entraînement du balai d'essuyage 2101 tel que le moteur d'entraînement 212.

Dans des modes de réalisation non limitatifs, ledit au moins un dispositif de pulvérisation 2100 se trouve sur le balai d'essuyage 2101, ou au niveau du bras d'entraînement 2102, ou au niveau du dispositif de connexion bras/balai, ou encore sur le capot du véhicule automobile 2. On peut avoir une combinaison de ces différents modes. Dans un mode de réalisation non limitatif, le dispositif de pulvérisation 2100 comprend une pluralité d'orifices 2100a. Ainsi, dans des modes de réalisation non limitatifs, les orifices 2100a se trouvent sur le balai d'essuyage 2101, ou au niveau du bras d'entraînement 2102, ou au niveau du dispositif de connexion bras/balai, ou encore sur le capot du véhicule automobile 2. Les orifices 2100a peuvent être disposés de manière à projeter du liquide Lq vers le haut des balais d'essuyage 2101, c'est-à-dire vers le haut de la surface vitrée 20, ou ils peuvent être disposés de manière à projeter du liquide Lq vers le bas des balais d'essuyage 2101, c'est-à-dire vers le bas de la surface vitrée 20.

Dans un mode de réalisation non limitatif, chaque balai d'essuyage 2101 comprend au moins une rampe hydraulique (autrement appelée rampe) ayant des orifices 2100a au travers desquels le liquide Lq peut être projeté/étalé sur la surface vitrée 20. La rampe hydraulique forme ainsi le dispositif de pulvérisation 2100. Dans une variante de réalisation non limitative, chaque balai d'essuyage 2101 comprend deux rampes, l'une des rampes possédant des orifices 2100a configurés pour projeter le liquide Lq vers le haut de la surface vitrée 20, l'autre rampe possédant des orifices 2100a configurés pour projeter le liquide Lq vers le bas de la surface vitrée 20. Ces rampes peuvent projeter le liquide Lq de façon simultanée ou en alternance selon le sens de déplacement du balai d'essuyage 2101. La ou chaque rampe d'un balai d'essuyage 2101 est alimentée en liquide Lq par l'intermédiaire du système de canalisations 213.

Le moteur d'entraînement 212 est configuré pour entraîner le ou les balais d'essuyage 2101, par l'intermédiaire des bras d'entrainement 2102, entre leurs positions basses PB et leurs positions hautes PH respectives.

Le système de canalisations 213 relie le réservoir 214 de stockage aux orifices 2100a dudit au moins un dispositif de pulvérisation 2100.

Dans un premier mode de réalisation non limitatif, le réservoir 214 est le réservoir du liquide lave-glace. Dans un deuxième mode de réalisation non limitatif, le réservoir 214 est un réservoir indépendant du réservoir du liquide lave-glace, chaque réservoir étant associé à une pompe différente. Dans un troisième mode de réalisation non limitatif, le réservoir 214 peut être cloisonné et comprendre deux compartiments de stockage respectif de liquide Lq et de liquide lave-glace, chaque compartiment étant associée à une pompe différente.

Ladite au moins une pompe 215 est associée au réservoir 214 comprenant le liquide Lq et est configurée pour faire circuler le liquide Lq dans le système de canalisation 213 jusqu'à éjection par l'orifice(s) 2100a dudit au moins un dispositif de pulvérisation 2100 sur la surface vitrée 20, à savoir la surface vitrée 20 du pare-brise dans l'exemple non limitatif pris.

Pour appliquer le liquide Lq sur la surface vitrée 20 du véhicule 2, le procédé de nettoyage 1 est décrit ci-après en référence aux figures 1 et 2 selon un mode de réalisation non limitatif. Le procédé de nettoyage 1 est mis en oeuvre par un système de nettoyage Sys qui comprend le dispositif de nettoyage 21 décrit précédemment et une unité de commande électronique ECU (appelée « Electronic Control Unit » en anglais), autrement appelée unité de contrôle électronique ECU.

L'unité de commande électronique ECU est configurée pour vérifier les conditions C suivantes :
- si la saison courante sc est le printemps ou l'été,
- la probabilité pb d'avoir des impacts d'insectes is sur ladite surface vitrée 20,
- si ledit véhicule 2 est arrêté.

Dans un mode de réalisation non limitatif, l'unité de commande électronique ECU est en outre configurée pour vérifier la condition C supplémentaire suivante :
- si les impacts d'insectes is ont sali ladite surface vitrée 20.

Dans un mode de réalisation non limitatif, l'unité de commande électronique ECU est en outre configurée pour vérifier une condition C supplémentaire suivante :
- si le véhicule automobile 2 est en extérieur et non pas dans un parking souterrain ou dans un garage,

Ainsi, dans une étape E1 illustrée sur les figures 1 ou 2 F1(ECU, C1(sc)), l'unité de commande électronique ECU vérifie la condition primaire C1 selon laquelle la saison courante sc est le printemps ou l'été.

Dans un mode de réalisation non limitatif, l'unité de commande électronique ECU vérifie la saison courante sc au moyen de la date courante dt et de l'hémisphère hs dans laquelle se trouve ledit véhicule automobile 2. Dans un exemple non limitatif, l'information de la date courante est donnée à l'unité de commande électronique ECU par l'horloge interne 22 du véhicule automobile 2. Dans un exemple non limitatif, l'information sur l'hémisphère (sud ou nord) est donnée à l'unité de commande électronique ECU par le dispositif de géolocalisation 23. Grâce à ces deux informations, on peut savoir si la saison sc est le printemps ou l'été. Lors de ces deux saisons, il y a beaucoup d'insectes et donc de risque d'avoir des impacts d'insectes sur la surface vitrée 20 et qui la salissent et qui peuvent gêner ainsi la visibilité du conducteur.

Dans une étape E2 illustrée sur les figures 1 ou 2 F2(ECU, C2(pb, is)), l'unité de commande électronique ECU vérifie la condition secondaire C2 qui est la probabilité pb d'avoir des impacts d'insectes is sur la surface vitrée 20.

Dans un premier mode de réalisation non limitatif, la vérification de ladite probabilité pb est basée sur une vitesse vt dudit véhicule automobile 2 supérieure à un seuil primaire. Dans un mode de réalisation non limitatif, le seuil primaire est égal à 70km/h (kilomètres/heure). Lorsque le véhicule automobile 2 roule à plus de 70km/h, cela signifie que le véhicule automobile 2 se trouve sur une voie relativement rapide. Au-delà de cette vitesse vt, les insectes peuvent s'écraser sur le pare-brise. L'information de vitesse est donnée à l'unité de commande électronique ECU par le compteur de vitesse 30 du véhicule automobile 2. Lorsque l'on roule à grande vitesse, il y a plus de risque que les insectes s'écrasent sur la surface vitrée 20 et donc d'avoir des impacts d'insectes is qui la salissent et qui peuvent gêner ainsi la visibilité du conducteur.

Dans un deuxième mode de réalisation non limitatif, la vérification de ladite probabilité pb est basée sur une géolocalisation gl dudit véhicule automobile 2 en dehors d'une agglomération urbaine. L'information de géolocalisation gl est donnée l'unité de commande électronique ECU par le dispositif de géolocalisation 23. En dehors des agglomérations urbaines, par exemple en campagne, il y a plus d'insectes et donc plus de risque d'avoir des impacts d'insectes is sur la surface vitrée 20 et qui la salissent, que dans les villes, et qui peuvent gêner ainsi la visibilité du conducteur.

Dans une étape E3 illustrée sur les figures 1 ou 2 F3(ECU, C3(2)), l'unité de commande électronique ECU vérifie une troisième condition C3 selon laquelle ledit véhicule automobile 2 est arrêté.

Ainsi, il faut que le véhicule automobile 2 soit arrêté pour lancer le cycle de nettoyage Cy, sinon s'il est lancé lorsque le véhicule automobile 2 est en train de rouler, cela va surprendre et gêner le conducteur dudit véhicule automobile 2. Il y a un risque de sécurité pour l'ensemble des passagers du véhicule automobile 2.

On notera que les étapes E1 à E3, peuvent être effectuées simultanément ou de façon séquentielle selon n'importe quel ordre, ou certaines simultanément et d'autres de façon séquentielle selon n'importe quel ordre.

Dans un mode de réalisation non limitatif illustré sur la figure 2, le procédé de nettoyage 1 comprend en outre une étape supplémentaire E3' illustrée F3'(ECU, C4(is, 20)), où l'unité de commande électronique ECU vérifie une quatrième condition C4 selon laquelle les impacts d'insectes is ont sali la surface vitrée 20 de sorte que la visibilité devienne gênante pour le conducteur.

Dans un premier mode de réalisation non limitatif, la vérification de la salissure de la surface vitrée 20 par les impacts d'insectes is est basée sur une durée de roulage tr dudit véhicule automobile 2 supérieur à un seuil secondaire. Dans un mode de réalisation non limitatif, le seuil secondaire est sensiblement égal à trois heures. On estime que ce temps de trois heures représente le temps qu'il faut pour que la salissure sur la surface vitrée 20 devienne gênante pour la visibilité du conducteur. L'information de durée de roulage tr est donnée l'unité de commande électronique ECU par le compteur de temps de roulage 25.

Ainsi, par exemple si on a roulé à plus de 70km/h pendant plus de trois heures, la visibilité devient gênante en raison des impacts d'insectes is. Dans le cas de la combinaison de ce premier mode de réalisation avec le premier mode de réalisation non limitatif de l'étape E2 (vitesse vt à plus de 70km/h), dans un mode de réalisation non limitatif la durée de roulage tr de trois heures peut être continue ou discontinue. Ainsi, lorsque la durée de roulage tr est discontinue, le compteur de temps de roulage 25 est configuré pour se déclencher la première fois que la vitesse vt du véhicule automobile 2 dépasse 70km/h, et n'est pas réinitialisé s'il repasse en dessous. Il continue de s'incrémenter lorsque la vitesse vt repasse au dessus de 70km/h.

Dans un deuxième mode de réalisation non limitatif, la vérification de la salissure de la surface vitrée 20 par les impacts d'insectes is est basée sur un nombre nb d'impacts d'insectes is sur la surface vitrée 20 supérieur à un seuil tertiaire. Dans un mode de réalisation non limitatif, le seuil tertiaire est égal à 15. Ainsi, au-delà de 15 impacts d'insectes, la salissure sur la surface vitrée 20 devient gênante pour la visibilité du conducteur. L'information du nombre nb d'impacts d'insectes is est donnée à l'unité de commande électronique ECU par le dispositif de mesure d'impacts d'insectes 24. Dans un mode de réalisation non limitatif, le dispositif de mesure d'impacts d'insectes 24 est un accéléromètre collé sur la surface vitrée 20 ou un accéléromètre collé sur le balai d'essuyage 2101 ou sur un bras d'entraînement 2102.

Dans un mode de réalisation non limitatif illustré sur la figure 2, le procédé de nettoyage 1 comprend en outre une étape supplémentaire E3" illustrée F3"(ECU, C5(2)), où l'unité de commande électronique ECU vérifie une cinquième condition C5 selon laquelle ledit véhicule automobile 2 est en extérieur.

Cette cinquième condition C5 évite de lancer un cycle de nettoyage Cy quand le véhicule automobile 2 est dans un garage ou parking souterrain. Cela évite que le liquide Lq ne se répande sur le sol du garage ou du parking souterrain et ne salisse le sol.

Dans un premier mode de réalisation non limitatif, l'information relative au véhicule automobile 2 en extérieur est basée sur :
- une information relative à la trappe à essence tp ouverte, et
- une information relative à l'absence d'une personne o sur le siège conducteur 29.
Si les deux conditions sont respectées, dans ce cas, cela indique que le véhicule automobile 2 est arrêté et en plein air puisqu'une personne est en train de mettre de l'essence dans ledit véhicule automobile 2.

L'information relative à l'ouverture de la trappe à essence tp ouverte est donnée à l'unité de commande électronique ECU par le capteur de trappe à essence 31. L'information relative à l'absence d'une personne o sur le siège conducteur 29 est donnée à l'unité de commande électronique ECU par le capteur de présence 27. Ce dernier permet de détecter si une personne o est assise ou non sur le siège conducteur 29, donc le siège conducteur 29 est occupé ou non.

Dans un deuxième mode de réalisation non limitatif, l'information relative au véhicule automobile 2 en extérieur est donnée à l'unité de commande électronique ECU par une information de luminosité lx du capteur de pluie-luminosité 28 en combinaison avec une information pour savoir si la géolocalisation gl du véhicule automobile 2 est fonctionnelle. La luminosité lx est autrement appelée éclairement lumineux ou éclairement.

On notera que ce capteur de pluie-luminosité 28 est couramment présent sur un véhicule automobile 2. Il est dans des exemples non limitatifs utilisé pour une fonction d'allumage automatique des feux lorsque le jour baisse ou lorsque le véhicule automobile 2 passe dans un tunnel, et pour une fonction de lancement automatique des essuie-glaces en cas de pluie.

Si la luminosité lx est supérieure ou égale à un seuil de luminosité, cela signifie que le véhicule automobile 2 est en plein air et qu'il ne fait pas nuit ou qu'il est dans un parking souterrain éclairé ou un garage éclairé. Si la luminosité lx est inférieure au seuil de luminosité, cela signifie que le véhicule automobile 2 est en plein air et qu'il fait nuit ou qu'il est dans un parking souterrain non éclairé ou dans garage non éclairé. Dans un exemple non limitatif, le seuil de luminosité est compris entre 5 Lux et 120 000 Lux. Dans un exemple non limitatif, l'éclairement des parkings se situe dans une plage comprise entre 5 Lux et 20 Lux. Dans un exemple non limitatif, l'éclairement d'un ciel nuageux et orageux jusqu'à entièrement couvert se situe dans une plage comprise entre 5 Lux et 40 Lux. Dans un exemple non limitatif, l'éclairement d'un ciel nuageux se situe dans une plage comprise entre à 200 Lux et 20 000 Lux. Dans un exemple non limitatif, l'éclairement au coucher ou au lever du soleil est sensiblement égal à 400 Lux. Dans un exemple non limitatif, l'éclairement d'un ciel bleu se situe dans une plage comprise entre 10 000 et 25 000 Lux. Dans un exemple non limitatif, l'éclairement de la lumière directe du soleil au zénith est sensiblement égal à 120 000 Lux.

Ainsi, dans une première variante de réalisation non limitative, pour vérifier de façon certaine si le véhicule automobile 2 se trouve dans un garage ou dans un parking souterrain, on utilise le capteur de pluie-luminosité 28 en combinaison avec le dispositif de géolocalisation 23 du véhicule automobile 2.

Si la luminosité lx est supérieure ou égale au seuil de luminosité et si la géolocalisation gl du véhicule automobile 2 via le dispositif de géolocalisation 23 est fonctionnelle, cela signifie que le véhicule automobile 2 est en plein air. Il n'est pas dans un parking souterrain ou dans un garage éclairé. On peut alors lancer le cycle de nettoyage Cy.

Si la luminosité lx est supérieure ou égale au seuil de luminosité et si la géolocalisation gl du véhicule automobile 2 via le dispositif de géolocalisation 23 n'est pas fonctionnelle, cela signifie que le véhicule automobile 2 n'est pas en plein air mais qu'il est dans un parking souterrain ou dans un garage éclairé. On ne lance alors pas le cycle de nettoyage Cy.

Si la luminosité lx est inférieure au seuil de luminosité et si la géolocalisation gl du véhicule automobile 2 via le dispositif de géolocalisation 23 est fonctionnelle, cela signifie que le véhicule automobile 2 est en plein air et qu'il fait nuit. Il n'est pas dans un parking souterrain ou dans un garage éclairé. On peut alors lancer le cycle de nettoyage Cy.

Si la luminosité lx est inférieure au seuil de luminosité et si la géolocalisation gl du véhicule automobile 2 via le dispositif de géolocalisation 23 n'est pas fonctionnelle, cela signifie que le véhicule automobile 2 n'est pas en plein air mais est dans un parking souterrain non éclairé ou dans un garage non éclairé. On ne lance alors pas le cycle de nettoyage Cy.

Dans une étape E4 illustrée sur les figures 1 ou 2 F4(ECU, 21, C, Cy), si l'ensemble des conditions C est rempli, alors l'unité de commande électronique ECU active ledit dispositif de nettoyage 21 pour lancer un cycle de nettoyage Cy. Par activation, on entend que l'unité de commande électronique ECU envoie une commande au dispositif de nettoyage 21 pour piloter la pompe 215 et pour piloter le moteur d'entraînement 212.

Ainsi, pour lancer le cycle de nettoyage Cy, il faut que :
- la saison courante sc soit le printemps ou l'été, et
- il y ait une probabilité d'avoir des impacts d'insectes is sur la surface vitrée, et
- le véhicule automobile 2 soit arrêté.

Dans le cas où la quatrième condition C4 est également vérifiée, il faut que : - les impacts d'insectes is aient sali la surface vitrée 20 de sorte que la visibilité est gênante pour le conducteur.

Dans le cas où la cinquième condition C5 est également vérifiée, il faut que :
- la saison courante sc soit le printemps ou l'été, et
- il y ait une probabilité d'avoir des impacts d'insectes is sur la surface vitrée, et
- les impacts d'insectes is aient sali la surface vitrée de sorte que la visibilité est gênante pour le conducteur, et
- le véhicule automobile 2 soit arrêté, et
- le véhicule automobile 2 soit en extérieur.

L'activation du dispositif de nettoyage 21 comprend :
- l'activation du moteur d'entraînement 212 qui permet d'entraîner le balai d'essuyage 2101 du système d'essuyage 2101,
- l'activation de la pompe 215 qui permet de faire circuler le liquide Lq dans le système de canalisation 213 jusqu'à son éjection par le ou les orifices 2100a du ou des dispositifs de pulvérisation 2100 sur la surface vitrée 20.

Dans une étape E5 illustrée sur la figure 1 et la figure 2 F5(21(210), Cy, Lq, 20), le cycle de nettoyage Cy est ainsi exécuté. Il est exécuté par le dispositif de nettoyage 21. Le cycle de nettoyage Cy comprend une pulvérisation par ledit au moins un dispositif de pulvérisation 2100 dudit liquide Lq sur ladite surface vitrée 20.

Dans un mode de réalisation non limitatif, le liquide Lq est un liquide de démoustiquage.

Dans des modes de réalisation non limitatifs, le liquide Lq est un liquide lave-glace ou de l'eau.

Dans des modes de réalisation non limitatifs, le liquide Lq est un liquide lave-glace chauffé ou de l'eau chauffée.

Ainsi, grâce au test sur les conditions C1 à C3, et le cas échéant C4 et/ou C5, un nettoyage de la surface vitrée 20 du véhicule automobile 2 peut être lancé, à savoir exécuté, et ce de façon automatique et autonome sans qu'une personne ne soit obligée d'intervenir.

Ainsi, le procédé de nettoyage 1 est mis en oeuvre par un système de nettoyage Sys d'une surface vitrée 20 d'un véhicule 2. Le système de nettoyage Sys est illustré sur la figure 3.

Le système de nettoyage Sys comprend :
- ledit dispositif de nettoyage 21 comprenant le système d'essuyage 210 avec au moins un dispositif de pulvérisation 2100, ledit dispositif de nettoyage 21 étant configuré pour exécuter un cycle de nettoyage Cy, ledit cycle de nettoyage Cy comprenant une pulvérisation par ledit au moins un dispositif de pulvérisation 2100 dudit liquide Lq sur ladite surface vitrée 20 (fonction illustrée f5(21(210), Cy, Lq, 20)), et
- ladite unité de commande électronique ECU.

Les fonctions de l'unité de commande électronique ECU sont illustrées sur la figure 3.

L'unité de commande électronique ECU est configurée pour :
- vérifier une première condition C1 selon laquelle la saison courante sc est le printemps ou l'été (fonction illustrée f1(ECU, C1(sc))),
- vérifier une deuxième condition C2 qui est la probabilité pb d'avoir des impacts d'insectes is sur ladite surface vitrée 20 (fonction illustrée f2(ECU, C2(pb, is))),
- vérifier une troisième condition C3 selon laquelle ledit véhicule 2 est arrêté (fonction illustrée f3(ECU, C3(2))).

A cet effet, pour réaliser la fonction f1, l'unité de commande électronique ECU est configurée pour :
- coopérer avec l'horloge interne 22 et recevoir une information i1 relative à la date courante dt (fonction illustrée f10(ECU, 22, i1)), et
- coopérer avec le dispositif de géolocalisation 23 et recevoir une information i2 relative à l'hémisphère hs dans laquelle se trouve ledit véhicule automobile (fonction illustrée f11(ECU, 23, i2)).

A cet effet, pour réaliser la fonction f2, l'unité de commande électronique ECU est configurée pour :
- coopérer avec le compteur de vitesse 30 et recevoir une information i3 relative à la vitesse vt du véhicule automobile 2 (fonction illustrée f12(ECU, 30, i3)), ou
- coopérer avec le dispositif de géolocalisation 23 et recevoir une information i4 indiquant si le véhicule automobile 2 se trouve en dehors d'une agglomération urbaine (fonction illustrée f14(ECU, 23, i4)).

A cet effet, pour réaliser la fonction f3, l'unité de commande électronique ECU est configurée pour:
- coopérer avec au moins un capteur d'arrêt 32 et recevoir une information i5 sur l'arrêt dudit véhicule automobile 2 (fonction illustrée f15(ECU, 32, i5)).

Dans un mode de réalisation non limitatif, l'unité de commande électronique ECU est en outre configurée pour vérifier une quatrième condition C4 selon laquelle les impacts d'insectes is ont sali ladite surface vitrée 20 (fonction illustrée f3'(ECU, C4(is, 20))). Cette fonction étant optionnelle, elle est illustrée en pointillés sur la figure 3.

A cet effet, pour réaliser la fonction f3', l'unité de commande électronique ECU est configurée pour :
- coopérer avec le compteur de temps de roulage 25 et recevoir une information i6 relative à la durée de roulage tr dudit véhicule automobile 2 (fonction illustrée f16(ECU, 25, i6)), ou
- coopérer avec le dispositif de mesure d'impacts 21 et recevoir une information i7 relative au nombre nb d'impacts d'insectes is sur la surface vitrée 20 (fonction illustrée f17(ECU, 21, i7)).

Dans un mode de réalisation non limitatif, l'unité de commande électronique ECU est en outre configurée pour vérifier une cinquième condition C5 selon laquelle ledit véhicule automobile 2 est en extérieur (fonction illustrée f3"(ECU, C5(2))). Cette fonction étant optionnelle, elle est illustrée en pointillés sur la figure 3.

A cet effet, pour réaliser la fonction f3", dans une première variante de réalisation non limitative, l'unité de commande électronique ECU est configurée pour :
- coopérer avec un capteur de trappe à essence 31 du véhicule automobile 2 et recevoir une information i8 qui indique que ladite trappe à essence tp est ouverte (fonction illustrée f18(ECU, 31, i8)), et
- coopérer avec le capteur de présence 27 et recevoir une information i9 relative à l'absence d'une personne o sur le siège conducteur 29 (fonction illustrée f19(ECU, 27, i9)).

A cet effet, pour réaliser la fonction f3", dans une deuxième variante de réalisation non limitative, l'unité de commande électronique ECU est configurée pour :
- coopérer avec le capteur de pluie-luminosité 28 et recevoir une information i10 relative à la luminosité lx à l'extérieur du véhicule automobile 2 (fonction illustrée f20(ECU, 28, i10)), et
- coopérer avec le dispositif de géolocalisation 23 et recevoir une information i11 qui indique si la géolocalisation gl est fonctionnelle (fonction illustrée f21(ECU, 23, i11)).

Enfin, si l'ensemble des conditions C1 à C3, le cas échéant C4 et/ou C5, est rempli, l'unité de commande électronique ECU est configurée pour activer ledit dispositif de nettoyage 21 pour lancer un cycle de nettoyage Cy (fonction illustrée f4(ECU, 21, C, Cy)).

Ainsi, lorsqu'il est activé, le dispositif de nettoyage 21 exécute le cycle de nettoyage Cy (fonction f5 décrite précédemment).

On notera que les informations i1 à i11 sont transmises via le réseau véhicule. Dans des exemples non limitatifs, le réseau véhicule est un réseau CAN ou LIN.

On notera que le système de nettoyage Sys peut comporter un ou plusieurs produits programmes d'ordinateur Pg comportant une ou plusieurs séquences d'instructions exécutables par ladite l'unité de commande électronique ECU, l'exécution desdites séquences d'instructions permettant une mise en oeuvre les étapes E1, E2, E3 et E4, le cas échéant E3' et E3", du procédé de nettoyage 1 décrit.

Un tel programme d'ordinateur Pg peut être inscrit en mémoire non volatile inscriptible de type ROM ou en mémoire non volatile réinscriptible de type EEPROM ou FLASH. Ledit programme d'ordinateur Pg peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité électronique de commande au moment de leur exécution. Dans l'exemple non limitatif de la figure 3, un programme d'ordinateur Pg est inscrit dans une mémoire 34 du système de nettoyage Sys.

Ainsi, le système de nettoyage Sys comprend au moins une mémoire 34 qui est couplée à ladite l'unité de commande électronique ECU. La mémoire 34 est un support de stockage non transitoire lisible par ordinateur comprenant des instructions qui, lorsqu'elles sont exécutées par un ordinateur, amène l'ordinateur à exécuter les étapes E1, E2, E3 et E4, le cas échéant E3' et E3", dudit procédé de nettoyage 1.

Bien entendu la description de l'invention n'est pas limitée aux modes de réalisation décrits ci-dessus et au domaine décrit ci-dessus. Ainsi, dans un autre mode de réalisation non limitatif, le procédé de nettoyage 1 peut être appliqué également sur des surfaces vitrées 20 latérales des vitres latérales du véhicule 2. Ainsi, dans un autre mode de réalisation non limitatif, le procédé de nettoyage 1 peut être appliqué à une surface vitrée 20 de la vitre arrière du véhicule 2. Ainsi, lors de la vérification de la cinquième condition C5, dans une troisième variante de réalisation non limitative, on peut combiner la détection de la luminosité lx avec une détermination de deux plages horaires jour et nuit (variables en fonction des saisons). Si la luminosité lx est inférieure au seuil de luminosité et si l'heure courante appartient à la plage horaire jour, cela signifie qu'on se trouve dans la journée, mais qu'il est possible que le véhicule automobile 2 se trouve dans un parking souterrain non éclairé ou dans garage non éclairé. On ne lance alors pas le cycle de nettoyage Cy. Si la luminosité lx est inférieure au seuil de luminosité et si l'heure courante appartient à la plage horaire de nuit, cela signifie que c'est la nuit, mais qu'il est possible que le véhicule automobile 2 se trouve dans un parking souterrain non éclairé ou dans garage non éclairé. On ne lance alors pas le cycle de nettoyage Cy. Pour décider de lancer le cycle de nettoyage Cy, dans cette troisième variante de réalisation non limitative, on peut utiliser en combinaison le test sur la géolocalisation gl fonctionnelle.

Ainsi, l'invention décrite présente notamment les avantages suivants :
- elle permet de vérifier les conditions dans lesquelles le dispositif de nettoyage 21 peut être activé automatiquement sans intervention manuelle d'une personne,
- en lançant un nettoyage automatique de la surface vitrée 20, elle permet une optimisation de la consommation du liquide Lq utilisé pour le nettoyage. En effet, le nettoyage est effectué au bon moment sans attendre plusieurs jours avant de nettoyer les impacts d'insectes is. Si on attend trop longtemps, cela entraîne une consommation très importante de liquide Lq et donc il faut prévoir une taille importante pour le réservoir 214 de stockage. Ainsi, grâce à l'automatisation du nettoyage, on réduit l'encombrement et aussi le poids du réservoir 214 de stockage dans le véhicule automobile 2,
- elle est simple à mettre en oeuvre.

## Revendications

1. Procédé de nettoyage (1) d'une surface vitrée (20) d'un véhicule (2), ledit véhicule (2) comprenant un dispositif de nettoyage (21) comprenant un système de d'essuyage (210) avec au moins un dispositif de pulvérisation (2100) d'un liquide (Lq), **caractérisé en ce que** ledit procédé de nettoyage (1) comprend les étapes de :
- vérifier (E1) une première condition (C1) selon laquelle la saison courante (sc) est le printemps ou l'été,
- vérifier (E2) une seconde condition (C2) qui est la probabilité (pb) d'avoir des impacts d'insectes (is) sur ladite surface vitrée (20),
- vérifier (E3) une troisième condition (C3) selon laquelle ledit véhicule (2) est arrêté,
- si l'ensemble desdites conditions (C) est rempli, alors activer (E4) ledit dispositif de nettoyage (21) pour lancer un cycle de nettoyage (Cy), et
- exécuter (E5) par ledit dispositif de nettoyage (21) ledit cycle de nettoyage (Cy).

2. Procédé de nettoyage (1) selon la revendication 1, selon lequel l'étape de vérification de la saison courante (sc) s'effectue au moyen de la date courante (dt) et de l'hémisphère (hs) dans laquelle se trouve ledit véhicule (2).

3. Procédé de nettoyage (1) selon l'une quelconque des revendications précédentes, selon lequel l'étape de vérification de la probabilité (pb) d'avoir des impacts d'insectes (is) sur ladite surface vitrée (20) est basée sur une vitesse (vt) dudit véhicule (2) supérieure à un seuil primaire.

4. Procédé de nettoyage (1) selon la revendication précédente, selon lequel ledit seuil primaire est égal à 70km/h.

5. Procédé de nettoyage (1) selon l'une quelconque des revendications précédentes, selon lequel l'étape de vérification (E2) de la probabilité (pb) d'avoir des impacts d'insectes (is) sur ladite surface vitrée (20) est basée sur une géolocalisation (gl) dudit véhicule (2) en dehors d'une agglomération urbaine.

6. Procédé de nettoyage (1) selon l'une quelconque des revendications précédentes, selon lequel ledit procédé de nettoyage (1) comprend en outre une étape supplémentaire (E3') de vérifier une quatrième condition (C4) selon laquelle les impacts d'insectes (is) ont sali ladite surface vitrée (20) de sorte à gêner la visibilité d'un conducteur dudit véhicule (2).

7. Procédé de nettoyage (1) selon la revendication précédente, selon lequel l'étape de vérification de la salissure (E3') de ladite surface vitrée (20) par les impacts d'insectes (is) est basée sur :
- une durée de roulage (tr) dudit véhicule (2) supérieur à un seuil secondaire, ou
- un nombre (nb) d'impacts d'insectes (is) supérieur à un seuil tertiaire.

8. Procédé de nettoyage (1) selon la revendication précédente, selon lequel ledit seuil secondaire est égal à trois heures.

9. Procédé de nettoyage (1) selon l'une quelconque des revendications précédentes, selon lequel ledit procédé de nettoyage (1) comprend en outre une étape supplémentaire (E3") de vérifier une cinquième condition (C5) selon laquelle ledit véhicule (2) est en extérieur.

10. Système de nettoyage (Sys) d'une surface vitrée (20) d'un véhicule (2), ledit système de nettoyage (Sys) comprenant un dispositif de nettoyage (21) comprenant un système de d'essuyage (210) avec au moins un dispositif de pulvérisation (2100) d'un liquide (Lq) sur une surface vitrée (20) d'un véhicule (2), ledit dispositif de nettoyage (21) étant configuré pour exécuter un cycle de nettoyage (Cy) comprenant une pulvérisation par ledit au moins un dispositif de pulvérisation (2100) dudit liquide (Lq) sur ladite surface vitrée (20), **caractérisé en ce que** ledit système de nettoyage (Sys) comprend en outre une unité de commande électronique (ECU) configurée pour :
- vérifier une première condition (C1) selon laquelle la saison courante (sc) est le printemps ou l'été,
- vérifier une deuxième condition (C2) qui est la probabilité (pb) d'avoir des impacts d'insectes (is) sur ladite surface vitrée (20),
- vérifier une troisième condition (C3) selon laquelle ledit véhicule (2) est arrêté, et
- si l'ensemble desdites conditions (C) est rempli, alors activer ledit dispositif de nettoyage (21) pour lancer un cycle de nettoyage (Cy).

## Patentansprüche

1. Reinigungsverfahren (1) zum Reinigen einer verglasten Fläche (20) eines Fahrzeugs (2), wobei das Fahrzeug (2) eine Reinigungsvorrichtung (21) umfasst, die ein Scheibenwischersystem (210) mit mindestens einer Sprühvorrichtung (2100) zum Sprühen einer Flüssigkeit (Lq) umfasst, **dadurch gekennzeichnet, dass** das Reinigungsverfahren (1) die folgenden Schritte umfasst:
- Überprüfen (E1) einer ersten Bedingung (C1), der zufolge die aktuelle Jahreszeit (sc) das Frühjahr oder der Sommer ist,
- Überprüfen (E2) einer zweiten Bedingung (C2), die die Wahrscheinlichkeit (pb) ist, dass Aufschläge von Insekten (is) auf der verglasten Fläche (20) vorliegen,
- Überprüfen (E3) einer dritten Bedingung (C3), der zufolge das Fahrzeug (2) stillsteht,
- wenn alle Bedingungen (C) erfüllt sind, dann Aktivieren (E4) der Reinigungsvorrichtung (21), um einen Reinigungszyklus (Cy) zu starten, und
- Ausführen (E5) des Reinigungszyklus (Cy) durch die Reinigungsvorrichtung (21).

2. Reinigungsverfahren (1) nach Anspruch 1, wobei der Schritt des Überprüfens der aktuellen Jahreszeit (sc) mittels des aktuellen Datums (dt) und der Hemisphäre (hs), in der sich das Fahrzeug (2) befindet, erfolgt.

3. Reinigungsverfahren (1) nach einem der vorhergehenden Ansprüche, wobei der Schritt des Überprüfens der Wahrscheinlichkeit (pb), dass Aufschläge von Insekten (is) auf der verglasen Fläche (20) vorliegen, auf einer Geschwindigkeit (vt) des Fahrzeugs (2) beruht, die über einem primären Schwellenwert liegt.

4. Reinigungsverfahren (1) nach dem vorhergehenden Anspruch, wobei der primäre Schwellenwert 70 km/h beträgt.

5. Reinigungsverfahren (1) nach einem der vorhergehenden Ansprüche, wobei der Schritt des Überprüfens (E2) der Wahrscheinlichkeit (pb), dass Aufschläge von Insekten (is) auf der verglasen Fläche (20) vorliegen, auf einer Geolokalisierung (gl) des Fahrzeugs (2) außerhalb eines städtischen Ballungsgebiets beruht.

6. Reinigungsverfahren (1) nach einem der vorhergehenden Ansprüche, wobei das Reinigungsverfahren (1) ferner einen zusätzlichen Schritt (E3') des Überprüfens einer vierten Bedingung (C4) umfasst, der zufolge Aufschläge von Insekten (is) die verglaste Fläche (20) so verschmutzt haben, dass sie die Sicht eines Fahrers des Fahrzeugs (2) behindern.

7. Reinigungsverfahren (1) nach dem vorhergehenden Anspruch, wobei der Schritt des Überprüfens der Verschmutzung (E3') der verglasten Fläche (20) durch die Aufschläge von Insekten (is) auf Folgendem beruht:
- einer Fahrdauer (tr) des Fahrzeugs (2), die über einem sekundären Schwellenwert liegt, oder
- einer Anzahl (nb) von Aufschlägen von Insekten (is), die über einem tertiären Schwellenwert liegt.

8. Reinigungsverfahren (1) nach dem vorhergehenden Anspruch, wobei der sekundäre Schwellenwert drei Stunden beträgt.

9. Reinigungsverfahren (1) nach einem der vorhergehenden Ansprüche, wobei das Reinigungsverfahren (1) ferner einen zusätzlichen Schritt (E3") des Überprüfens einer fünften Bedingung (C5) umfasst, der zufolge das Fahrzeug (2) im Freien ist.

10. Reinigungssystem (Sys) zum Reinigen einer verglasten Fläche (20) eines Fahrzeugs (2), wobei das Reinigungssystem (Sys) eine Reinigungsvorrichtung (21) umfasst, die ein Scheibenwischersystem (210) mit mindestens einer Sprühvorrichtung (2100) zum Sprühen einer Flüssigkeit (Lq) auf eine verglaste Fläche (20) eines Fahrzeugs (2) umfasst, wobei die Reinigungsvorrichtung (21) dazu ausgestaltet ist, einen Reinigungszyklus (Cy) auszuführen, der ein Sprühen der Flüssigkeit (Lq) durch die mindestens eine Sprühvorrichtung (2100) auf die verglaste Fläche (20) umfasst, **dadurch gekennzeichnet, dass** das Reinigungssystem (Sys) ferner eine elektronische Steuerungseinheit (ECU) umfasst, die dazu ausgestaltet ist:
- eine erste Bedingung (C1) zu überprüfen, der zufolge die aktuelle Jahreszeit (sc) das Frühjahr oder der Sommer ist,
- eine zweite Bedingung (C2) zu überprüfen, die die Wahrscheinlichkeit (pb) ist, dass Aufschläge von Insekten (is) auf der verglasten Fläche (20) vorliegen,
- eine dritte Bedingung (C3) zu überprüfen, der zufolge das Fahrzeug (2) stillsteht, und
- wenn alle Bedingungen (C) erfüllt sind, dann die Reinigungsvorrichtung (21) zu aktivieren, um einen Reinigungszyklus (Cy) zu starten.

## Claims

1. Cleaning method (1) for cleaning a glazed surface (20) of a vehicle (2), said vehicle (2) comprising a cleaning device (21) comprising a wiping system (210) with at least one spray device (2100) for spraying a liquid (Lq), **characterized in that** said cleaning method (1) comprises the steps of:
- verifying (E1) a first condition (C1) that the current season (sc) is spring or summer,
- verifying (E2) a second condition (C2) which is the probability (pb) of there being insect strike (is) on said glazed surface (20),
- verifying (E3) a third condition (C3) that said vehicle (2) is stopped,
- if all of said conditions (C) are met, then activating (E4) said cleaning device (21) in order to begin a cleaning cycle (Cy), and
- executing (E5) said cleaning cycle (Cy) using said cleaning device (21).

2. Cleaning method (1) according to Claim 1, whereby the step of verifying the current season (sc) is performed using the current date (dt) and the hemisphere (hs) in which said vehicle (2) is located.

3. Cleaning method (1) according to either one of the preceding claims, whereby the step of verifying the probability (pb) of there being insect strike (is) on said glazed surface (20) is based on a speed (vt) of said vehicle (2) being above a primary threshold.

4. Cleaning method (1) according to the preceding claim, whereby said primary threshold is equal to 70km/h.

5. Cleaning method (1) according to any one of the preceding claims, whereby the step (E2) of verifying the probability (pb) of there being insect strike (is) on said glazed surface (20) is based on a a geolocation (gl) of said vehicle (2) being outside a built-up urban area.

6. Cleaning method (1) according to any one of the preceding claims, whereby said cleaning method (1) further comprises an additional step (E3') of verifying a fourth condition (C4) that insect strike (is) has dirtied said glazed surface (20) such as to impair visibility for a driver of said vehicle (2).

7. Cleaning method (1) according to the preceding claim, whereby the step (E3') of verifying that insect strike (is) has dirtied said glazed surface (20) is based on:
- a running time (tr) of said vehicle (2) above a secondary threshold, or
- a number (nb) of insect strikes (is) above a tertiary threshold.

8. Cleaning method (1) according to the preceding claim, whereby said secondary threshold is equal to three hours.

9. Cleaning method (1) according to any one of the preceding claims, whereby said cleaning method (1) further comprises an additional step (E3") of verifying a fifth condition (C5) that said vehicle (2) is outdoors.

10. Cleaning system (Sys) for cleaning a glazed surface (20) of a vehicle (2), said cleaning system (Sys) comprising a cleaning device (21) comprising a wiping system (210) with at least one spray device (2100) for spraying a liquid (Lq) onto a glazed surface (20) of a vehicle (2), said cleaning device (21) being configured to execute a cleaning cycle (Cy) comprising spraying said liquid (Iq) onto said glazed surface (20) using said at least one spray device (2100), **characterized in that** said cleaning system (Sys) further comprises an electronic control unit (ECU) configured to:
- verify a first condition (C1) that the current season (sc) is spring or summer,
- verify a second condition (C2) which is the probability (pb) of there being insect strike (is) on said glazed surface (20),
- verify a third condition (C3) that said vehicle (2) is stopped, and
- if all of said conditions (C) are met, then activate said cleaning device (21) in order to begin a cleaning cycle (Cy).
